(19) **Europäisches Patentamt**

**European Patent Office**

**Office européen des brevets**

(11) Veröffentlichungsnummer: **0 214 251 B1**

(12) # EUROPÄISCHE PATENTSCHRIFT

(45) Veröffentlichungstag der Patentschrift: **06.05.92**

(21) Anmeldenummer: **86901778.0**

(22) Anmeldetag: **04.03.86**

(86) Internationale Anmeldenummer:
**PCT/DE86/00081**

(87) Internationale Veröffentlichungsnummer:
**WO 86/05237 (12.09.86 86/20)**

(51) Int. Cl.⁵: **F02F 1/42**, F02B 31/00

(54) **LADUNGSDRALL- UND/ODER -TURBULENZEINRICHTUNG FÜR VERBRENNUNGSMOTORE.**

(30) Priorität: **05.03.85 DE 3507767**

(43) Veröffentlichungstag der Anmeldung:
**18.03.87 Patentblatt 87/12**

(45) Bekanntmachung des Hinweises auf die
Patenterteilung:
**06.05.92 Patentblatt 92/19**

(84) Benannte Vertragsstaaten:
**CH DE FR GB IT LI**

(56) Entgegenhaltungen:
**WO-A-79/00501     WO-A-79/00707
DE-A- 1 576 012     DE-A- 2 234 642
DE-A- 2 709 519     DE-B- 1 044 514**

**See also references of WO8605237**

(73) Patentinhaber: **Motoren-Werke Mannheim Aktiengesellschaft vorm. Benz Abt. stationärer
Motorenbau
Carl-Benz-Strasse 5
W-6800 Mannheim 1(DE)**

(72) Erfinder: **AUPOR, Hans
Obere Seestrasse 9/1
W-7994 Langenargen/B(DE)**
Erfinder: **MÜLLER, Wilhelm
Apothekenweg 3a
W-8056 Neufahrn(DE)**

(74) Vertreter: **Nau, Walter, Dipl.-Ing.
Klöckner-Humboldt-Deutz AG Deutz-
Mülheimer-Strasse 111
W-5000 Köln 80(DE)**

## Beschreibung

Die Erfindung betrifft eine Brennkraftmaschine mit einem Zylinderkopf für direkt einspritzende Dieselmotoren nach dem Oberbegriff des Anspruchs 1.

Bei direkt einspritzenden Saug- und vor allem hochaufgeladenen Dieselmotoren ist es nicht möglich, die Gemischbildung im gesamten Drehzahl- und Leistungsbereich optimal abzustimmen, derart, daß eine raucharme und schadstoffarme Verbrennung bei niedrigem Verbrauch erfolgt. Ein hauptsächlicher Einflußparameter auf die Gemischbildung und damit auf die Verbrennung ist der Verbrennungsluft-Ladungsdrall im Zeitpunkt der Kraftstoffeinspritzung. Dieser Drall wird durch geeignete Anordnung und Gestaltung der Einlaßkanäle im Zylinderkopf erzeugt und überlagert sich mit der Quetschströmung bei Muldenkolben.

Es ist hierzu bekannt (DE-OS 22 34 642), je Zylinder zwei Einlaßkanäle vorzusehen, deren einer als Füllungskanal und deren anderer als Drallkanal ausgebildet ist, wobei im Drallkanal durch spiralige Kanalführung eine spiralige Anströmung des Ventiltellers bewirkt wird.

Die Ladungsdrehung im Brennraum ist hierbei der Motorendrehzahl proportional, wobei eine bei Motorenhöchstdrehzahl und -leistung bzw. bei entsprechenden Nennwerten des Motors abgestimmte Gemischbildung bezüglich Drallzahl und gegebenenfalls Einspritzdüsenauslegung im unteren Drehzahl- und Lastbereich nicht mehr optimal ist, zumal hier insbesondere unter dem Einfluß von Abgasturboladern Luftmangel auftritt. Das Arbeiten von Motoren in wechselnden Drehzahl- und Lastbereichen ist jedoch bei vielen Motorenanwendungen unabdingbar, beispielsweise bei Schiffs- und Strömungsmaschinenantrieben.

Es ist bereits bekannt, den erwähnten Mangel durch eine Stufenaufladung mit mehreren zu- und abschaltbaren Abgasturboladergruppen durch vermehrte Zufuhr von Verbrennungsluft in den kritischen Drehzahl- und Leistungsbereichen zu beheben. Mehrere Abgasturboladergruppen sind jedoch aufwendig und teuer.

Eine weitere Möglichkeit zum Beheben des Mangels besteht darin, die in den kritischen Betriebspunkten theoretisch für die Verbrennung noch ausreichende Luftmasse durch Erhöhen des Ladungsdralls intensiv mit dem Kraftstoff der Einspritzstrahlen und dem wandangelagerten Kraftstoffanteil für die Verbrennung aufzubereiten. Hierzu ist es bekannt, in ihrer Stellung veränderliche Schirmventile vorzusehen. Ein gravierender Nachteil dieser Schirmventile ist im durch sie bedingten Ausschluß automatischer Ventildreheinrichtungen zu sehen, die den hauptsächlich bei Einlaßventilen hoch aufgeladener Dieselmotoren auftretenden Sitzverschleiß vermindern; zudem ist auch der Aufwand für die Schirmventile und deren Steuerung beträchtlich.

Der Erfindung liegt die Aufgabe zugrunde, eine Brennkraftmaschine mit einem Zylinderkopf für direkt einspritzende Dieselmotoren mit zwei Einlaß- und Auslaßventilen je Zylinder gemäß dem Oberbegriff des Anspruchs 1 zu schaffen, mit dem mit einfachen Mitteln eine raucharme und schadstoffarme Verbrennung auch im niedrigen Drehzahl- und Lastbereich des Motors ermöglicht ist, wobei die Verwendung von Ventildreheinrichtungen nicht ausgeschlossen ist.

Diese Aufgabe wird erfindungsgemäß durch die kennzeichnenden Merkmale des Anspruchs 1 gelöst.

Durch das geschlossene Strömungsleitorgan wird im Teillastbereich die Luftströmung im Füllungskanal derart beeinflußt, daß im Zylinder eine Verminderung der drallmindernden Ladeluftmenge und eine Erhöhung der die Drall und Verwirbelung verstärkenden Ladeluft verursacht wird. Verstärkt wird dies auch dadurch, daß die Luft aus dem Füllungskanal in den Drallkanal abgedrängt wird. Bei Vollastleistung des Motors und dementsprechend hoher Motorendrehzahl ist das Strömungsleitorgan geöffnet und nimmt keinen Einfluß auf die Luftströmung im Füllungskanal, da hierbei auslegungsbedingt bereits raucharme und schadstoffarme Verbrennung erreicht ist.

In den gattungsfremden DE-A 27 09 519 und DE-A 15 76 012 ist jeweils ein Otto-Motor bzw. ein Otto-Motor und ein Diesel-Motor bescrieben, wobei der Zylinderkopf nur einen Einlaßkanal aufweist. Dieser Einlaßkanal ist als Füllungskanal ausgebildet und kann durch eine Strömungsdrosseleinrichtung so verändert werden, daß die durch den Einlaßkanal hindurchtretende brennbare Ladung im Zylinder einen Wirbel bildet.

In einer erfindungsgemäßen vorteilhaften Ausführungsform weist das Strömungsleitorgan lediglich zwei Einstellungen auf, nämlich eine Ruhe-Offenstellung und eine Arbeits-Geschlossenstellung.

Ferner wird das Strömungsleitorgan vorteilhafterweise in Abhängigkeit von der Belastung der Brennkraftmaschine gesteuert. So kann es sinnvoll sein, das Strömungsleitorgan in Abhängigkeit vom Ladedruck und/oder der Motordrehzahl und/oder der Füllungsstellung an der Einspritzpumpe zu verstellen.

In bevorzugter Ausführungsform ist das Strömungsleitorgan eine Klappe.

In den Zeichnungen sind Ausführungsbeispiele für nach der Erfindung ausgebildete Zylinderköpfe dargestellt und zwar zeigt

Fig.1: schematisch eine perspektivische Ansicht eines erfindungsgemäßen Zylinderkopfes,

Fig.2: eine ebenfalls schematische, perspektivische Ansicht eines Füllungskanals,

Fig.3: eine zu Fig.2 geänderte Ausführungsform,

Fig.4: die Ausführung nach Fig.3 bei geänderter Stellung des Strömungsleitorgans und

Fig.5: einen Schnitt durch einen erfindungsgemäßen Zylinderkopf.

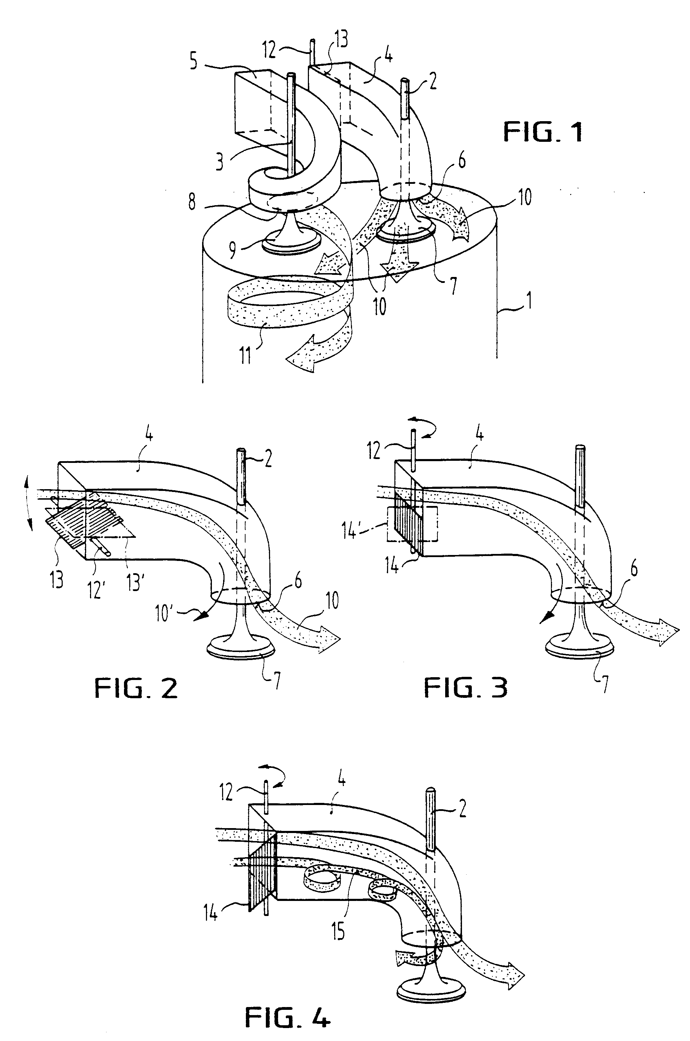

Die Fig.1 zeigt schematisch einen Zylinder 1 mit zwei Einlaßventilen 2 und 3 und zwei Einlaßkanälen 4 und 5. Im weiteren ist der Zylinderkopf für direkt einspritzende Dieselmotoren nicht dargestellt. Die beiden Einlaßventile 2 und 3 sind seitlich der Achse des Zylinders 1 angeordnet. Der Einlaßkanal 4 ist als Füllungskanal mit möglichst geringer Krümmung und dementsprechend geringem Strömungswiderstand ausgebildet. Er verläuft in seinem einlaßventilfernen Abschnitt etwa tangential, radial oder zwischen diesen Lagen zum Zylinder 1 und erfährt erst im ventilnahen Bereich eine Krümmung in eine zur Achse des Zylinders 1 etwa parallele Richtung; seine Mündung 6 in den Zylinder 1 ist durch den Teller 7 des Einlaßventils 2 verschließbar. Der Einlaßkanal 5 verläuft ebenfalls in seinem einlaßventilfernen Abschnitt etwa radial, tangential oder zwischen diesen Richtungen zum Zylinder 1. In seinem einlaßventilnahen Abschnitt ist er spiralig um den Schaft des Einlaßventiles 2 herum in Richtung zum Zylinder 1 hin gewunden. Seine Mündung 8 in den Zylinder 1 ist vom Teller 9 des Einlaßventiles 3 verschließbar; der Einlaßkanal 5 ist somit als Drallkanal ausgebildet.

Bei geöffneten Einlaßventilen 2 und 3 strömt die durch den Füllkanal 4 gelangende Ladeluft annähernd gleichmäßig durch die Mündung 6 und vom Ventilteller 7 umgelenkt etwa allseitig gleichmäßig ab und in den Zylinder 1 ein, während die den Drallkanal 5 durchströmende Ladeluft durch die spiralige Einlaßkanalführung einen Drall erfährt und spiralenförmig vom Einlaßventilteller 9 in den Zylinder 1 einströmt; in Fig.1 ist die allseitig etwa gleichmäßige Abströmung vom Einlaßventilteller 7 mit den Pfeilen 10 und die spiralige Luftabströmung vom Einlaßventilteller 9 durch den Pfeil 11 angedeutet. Es ist zu erkennen, daß der gemäß Fig.1 nach links in den Zylinder 1 einströmende Luftanteil, der den Einlaßkanal 4 durchströmenden Ladeluft, die spiralförmige Abströmung der durch den Einlaßkanal 5 einströmenden Ladeluft stört, während der rechtsseitig abströmende Anteil der Ladeluft aus dem Einlaßkanal 4 durch die Wandung des Zylinders 1 umgelenkt wird und den Drall bzw. die Verwirbelung der Ladeluft im Zylinder 1 unterstützt. Insoweit sind in Fig.1 die bei vierventiligen Zylindern von Verbrennungskolbenmaschinen üblichen Strömungsverhältnisse während des Ladevorganges dargestellt, wobei die Abstimmung der beiden Einlaßkanäle 4 und 5 sowie der nicht dargestellten Einspritzdüse mit dem Zylinder 1 derart erfolgt, daß bei Nenndrehzahl und Nennleistung oder auch bei Höchstdrehzahl und Höchstleistung des Verbrennungskolbenmotors optimale Ladungsdrall- und/oder -turbulenzverhältnisse herrschen, derart, daß eine möglichst raucharme und schadstoffarme Verbrennung mit hohem Wirkungsgrad erfolgt. Bei niedrigerer Leistungsabgabe des Verbrennungskolbenmotors jedoch werden die Einlaßkanäle 4 und 5 von geringeren Luftmengen durchströmt. Die Drallund/oder Turbulenzentwicklung der Ladung im Zylinder 1 reicht dann nicht mehr zur optimalen Treibstoffaufbereitung für die Verbrennung aus. Es tritt eine an Ruß- und Schadstoffanteilen angereicherte Verbrennung bei gesteigertem Verbrauch auf.

Zur Vermeidung dieses Mangels ist in dem Füllungs-Einlaßkanal 4 gemäß Fig.1 eine um eine vertikale Achse 12 drehbare Klappe 13 eingeordnet. Im dargestellten Ruhezustand der Klappe 13 liegt diese an der dem Drallkanal 5 zugewandten Kanalseite flach an und nimmt somit auf die Durchströmung des Einlaßkanales 4 keinen Einfluß; diese Ruhestellung nimmt die Klappe 13 bei Nenn- oder Vollastbetrieb des Verbrennungskolbenmotors ein. Im Teillastbetrieb wird die Klappe 13 um die Achse 12 gedreht, derart, daß sie mehr oder weniger die Durchströmung des Einlaßkanales 4 mit den nachfolgend geschilderten Effekten beeinflußt, wodurch im Teillastbereich der Drall und/oder die Turbulenz der Ladeluft im Zylinder 1 gesteigert und damit die Treibstoffaufbereitung verbessert wird, so daß eine wie im Vollastbetrieb raucharme und schadstoffarme Verbrennung mit niedrigem Verbrauch erreichbar ist. Die Einstellung der im Zylinderkopf oder einem diesem laderseitig vorgeordneten Kanalanschlußteil angeordneten Klappe 13 erfolgt zweckmäßig manuell oder selbsttätig in Abhängigkeit von Motorenparametern, insbesondere dem Ladedruck und/oder der Motorendrehzahl.

In Fig.2 ist der als Füllungskanal ausgebildete Einlaßkanal 4 nochmals unter geändertem Blickwinkel mitsamt dem Einlaßventil 2 und dem Ventilteller 7 dargestellt, wobei die Klappe 13 zum Verdeutlichen der Funktion um eine horizontale, seitliche Achse 12' drehbar ist. In Fig.2 ist die Klappe 13 im halb geöffneten Zustand dargestellt, was einer mittleren Leistungsabgabe des Motors entspricht. Der voll geöffnete Klappenzustand ist mit der Linie 13' angedeutet. Bei teilgeöffneter Klappe 13 wird die Durchströmung des Einlaßkanals 4 im unteren, zylindernahen Bereich behindert, während im oberen, zylinderfernen Bereich eine unbehinderte Durchströmung erfolgen kann. Diese Durchströmungsunterschiede setzen sich durch die Länge des Einlaßkanals 4 wenigstens angenähert fort, so daß bei geöffnetem Einlaßventils 2 und damit von der Mündung 6 abgesenktem Ventilteller 7, sich eine über den Umfang ungleichförmige Abströmung der Ladeluft in den Zylinder ergibt. Während die Hauptmenge der Ladeluft gemäß den dick ausgezogenen Pfeilen 10 an der Klappe 13 vorbei den Einlaßkanal 4 durchströmt und vom Ventilteller 7 wiederum abgelenkt etwa in Verlängerungsrichtung des Einlaßkanals 4 in den Zylinder 1 einströmt, gelangt ein durch den schwachen Pfeil 10' angedeuteter, geringer Anteil der Ladeluft auf seiten des Einlaßkanals 4 aus der Mündung 6 in den Zylinder 1. Die Anordnung ist nun derart getroffen, daß der große Ladeluftanteil gemäß Pfeil 10 der Fig.2 drall- und/oder turbulenzverstärkend wirkt, während nur der geringe Ladeluftanteil gemäß Pfeil 10' keinen oder hemmenden Einfluß auf die Drall- und/oder Turbulenzentwicklung der Ladeluft im Zylinder 1 nimmt. Insgesamt ergibt sich somit durch die teilangestellte Klappe 13 eine ungleichförmige Abströmung der Ladeluft um das geöffnete Einlaßventil 2, wobei der drall- und/oder -turbulenzverstärkende Ladeluftanteil wesentlich verstärkt und der entgegenwirkende Ladeluftanteil wesentlich abgeschwächt ist, sich insgesamt im Zylinder also eine hohe Drall- und/oder Turbulenzentwicklung trotz mittlerem Teillastbetrieb des Motors einstellt. Übertragen auf Fig.1 ergibt sich also beim Teilschließen der Klappe 13 eine ungleichmäßige Abströmung der Ladeluft vom Einlaßventilteller 7, derart, daß die gemäß dem rechtsweisenden Pfeil 10 abströmende, drallverstärkend wirkende Ladeluftmenge gesteigert, die andersseitig gemäß dem linsweisenden Pfeil 10' abströmende, drallmindernd wirkende Ladeluftmenge dagegen vermindert wird.

Die Klappe 13 ist derart ausgebildet, daß sie in ihrer Arbeitsstellung, in welcher sie voll angestellt ist und quer zur Längsrichtung des Einlaßkanals 4 verläuft, den Querschnitt des Einlaßkanals 4 nur in einem Teilbereich verschließt. Diese Arbeitsstellung nimmt die Klappe 13 im niedrigen Teillastbetrieb des Verbrennungskolbenmotors ein. Bei teilgeöffnetem Querschnitt des Einlaßkanals 4 treten hinter der Klappe 13 Wirbelstraßen in der Ladeluftströmung auf, welche den Drall und/oder die Turbulenz der Ladeluft im Zylinder 1 zusätzlich verstärken; diese Wirbelstraßen sind in Fig.2 nicht dargestellt.

Die Anordnung nach Fig.3 entspricht derjenigen nach Fig.2, wobei die Klappe 14 um eine vertikale Achse 12 drehbar ist und eine wesentlich geringere Höhe als der Einlaßkanal 4 aufweist, so daß sie in der dargestellten Arbeitsstellung, also im Schließzustand, nur den unteren Abschnitt des Einlaßkanals 4 versperrt. Es ergibt sich dabei eine wie zu Fig.2 beschrieben ungleichförmige Abströmung der Ladeluft aus der Mündung 6 in den Zylinder 1 mit der drall- und/oder turbulenzverstärkenden Wirkung. Im voll geöffneten Zustand nimmt die Klappe 14 die mit Linie 14' angedeutete Lage ein, in welche sie die Durchströmung des Einlaßkanals 4 nicht beeinflußt. Im teilgeöffneten Zustand ist die Klappe 14 gemäß Fig.4 schräg angestellt, wobei wenigstens einseitig sich zusätzliche, durch den Pfeil 15 angedeutete Wirbelstraßen in der Ladeluftströmung ausbilden, welche drallverstärkend auf die Ladeluft einwirken, wie es bereits zu Fig.2 erwähnt wurde.

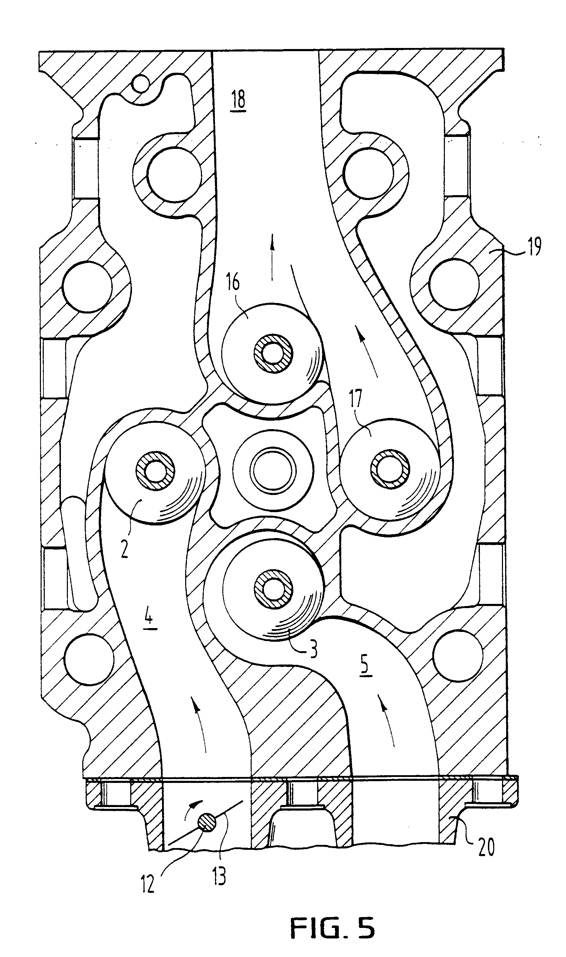

Im Zylinderkopf nach Fig.5 verlaufen entsprechend zu Fig.1 als Einlaßkanäle ein Füllungskanal 4 und ein Drallkanal 5 zu den Einlaßventilen 2 und 3. Für den Auslaß sind ebenfalls zwei Ventile, die Auslaßventile 16 und 17 vorgesehen, von welchen ein Auslaßkanal 18 wegführt. In den Füllungskanal 4 des Zylinderkopfes 19 bzw. einem diesem vorgeschaltetem Anschlußstück 20 ist die Klappe 13 um die vertikale Achse 12 drehbar derart angeordnet, daß sie in ihrer Arbeit- bzw. Schließstellung die Durchströmung des Füllungskanals 4 nur in einem Teilbereich abzusperren vermag; die Ladeluftmenge wird hierbei teilweise aus dem Füllungskanal 4 in den Drallkanal 5 verdrängt. Diese Arbeit- bzw. Schließstellung nimmt die Klappe 13 bei niedrigem Teillastbetrieb des Verbrennungskolbenmotors ein; mit steigender Leistungsabgabe des Motors wird die Klappe 13 zunehmend geöffnet, bis sie bei Nenn- oder Höchstleistung des Motors ihre volle Öffnung- und damit Ruhestellung einnimmt. Mit zunehmender Leistungsabgabe des Motors erfolgt also eine zunehmende Durchströmung des Füllungskanals 4, so daß eine zunehmende Ladeluftmenge nahezu drallfrei durch das Einlaßventil 2 in den Zylinder einströmt. Die Abstimmung erfolgt dabei derart, daß in allen Lastbereichen des Motors optimale Drall- und/oder Turbulenzwirkungen im Zylinder 1 erreicht werden.

Die Drehsteuerung der Klappe 13 bzw. 14 erfolgt, wie bereits erwähnt, vorzugsweise selbsttätig in Abhängigkeit von jeweiligen die Leistungsabgabe des Motors signalisierenden Motorparametern, insbesondere in Abhängigkeit von der Motorendrehzahl und/oder dem Ladedruck des Motors. Die Drehbewegung selbst kann durch übliche Verstelleinrichtungen bewirkt werden. Die Drehsteuerung kann auch in Abhängigkeit der Füllungsstellung an der Einspritzpumpe erfolgen. Die Verstellung kann auch lediglich zweistufig mit Ruhe-Offenstellung und Arbeits-Geschlossenstellung, mit gestuften Zwischenstellungen oder auch stufenlos mit Zwischenstellungen erfolgen. Anstelle einer Drehklappe, wie zu allen Ausführungsbeispielen beschrieben, können auch andersartige Blenden, beispielsweise Drosselschieber vorgesehen werden.

Es ist möglich, die Klappe 13, 14 durch einen konstruktiv einfachen Anbau oder vor einem Zylinderkopf ohne Änderung von dessen Einlaßkanalform anzubringen. Es ist damit auch zum Nachrüsten bestehender Motorkonstruktionen geeignet. Das Strömungsleitorgan bzw. die Klappe kann derart ausgebildet werden, daß es die Pumpgrenze eines vorgesehenen Abgasturboladers verlagert, so daß sich ein erweiterter Teillast-Betriebsbereich ergibt.

**Patentansprüche**

1. Brennkraftmaschine mit einem Zylinderkopf für direkt einspritzende Dieselmotoren mit zwei Einlaß- und Auslaßventilen je Zylinder, von denen ein erstes Einlaßventil (2) und ein erstes Auslaßventil (17) auf der Längsmittelebene des Motors und ein zweites Einlaßventil (3) und ein zweites Auslaßventil (16) auf einer senkrecht zur Längsmittelebene angeordneten Querebene liegen und den Einlaßventilen (2, 3) jeweils ein Einlaßkanal (4, 5) zugeordnet ist, von denen einer als Drallkanal (5) und der andere als Füllungskanal (4) ausgebildet ist und der Drallkanal (5) dem auf der Querebene und der Füllungskanal (4) dem auf der Längsmittelebene liegenden Einlaßventil (2) zugeordnet ist und der Drallkanal (5) ohne querschnittsbeeinflussendes Strömungsleitorgan ausgebildet ist und im Zentrum aller Ventile eine Einspritzdüse angeordnet ist, dadurch gekennzeichnet, daß im Füllungskanal (4) ein verstellbares Strömungsleitorgan angeordnet ist, welches in Abhängigkeit von Motorparametern derart einstellbar ist, daß das Strömungsleitorgan im Teillastbereich geschlossen und im Vollastbereich geöffnet ist, und daß die Projektionsfläche des Strömungsleitorgans auf die Ebene senkrecht zur Kanalachse im geschlossenen Zustand kleiner ist als der Querschnitt des Füllungskanals (4), so daß dieser bei geschlossenem Strömungsleitorgan nur in einem Teilbereich verschlossen ist und dadurch die Luftströmung so beeinflußt wird, daß im Zylinder eine Verminderung der drallmindernden Ladeluftmenge und eine Erhöhung der die Drall und Verwirbelung verstärkenden Ladeluft verursacht wird.

2. Brennkraftmaschine nach Anspruch 1, dadurch gekennzeichnet, daß das Strömungsleitorgan lediglich zwei Einstellungen, nämlich eine Ruhe-Offenstellung und eine Arbeits-Geschlossenstellung aufweisen kann.

3. Brennkraftmaschine nach Anspruch 1 oder 2, dadurch gekennzeichnet, daß das Strömungsleitorgan in Abhängigkeit von der Belastung der Brennkraftmaschine gesteuert ist.

4. Brennkraftmaschine nach einem der Ansprüche 1 bis 3, dadurch gekennzeichnet, daß das Strömungsleitorgan in Abhängigkeit vom Ladedruck und/oder der Motorendrehzahl und/oder der Füllungsstellung an der Einspritzpumpe verstellbar ist.

5. Brennkraftmaschine nach einem der Ansprüche 1 bis 4, dadurch gekennzeichnet, daß das Strömungsleitorgan eine Klappe (13, 14) ist.

**Claims**

1. An internal combustion engine with a cylinder head for direct-injection diesel engines with two intake and exhaust valves per cylinder, a first intake valve (2) and a first exhaust valve (17) being disposed along the longitudinal central plane of the engine and a second intake valve (3) and a second exhaust valve (16) being disposed on a transverse plane at right angles to the longitudinal central plane and each intake valve (2, 3) being associated with a respective intake port (4, 5), one port being constructed as a spin port (5) and the other as a fuel-injection port (4), and the spin port (5) is associated with the intake valve on the transverse plane and the fuel-injection port (4) is associated with the intake valve (2) on the longitudinal central plane, and the spin port (5) is constructed without a flow guide means for influencing the cross-section, and an injection nozzle is disposed at the centre of all the valves, characterised in that an adjustable flow guide means is disposed in the fuel-injection port (4) and, in dependence on engine parameters, is adjustable so that the flow guide means is closed in the partial-load range and is open in the full-load range, and the projected area of the flow guide means on to the plane at right angles to the port axis in the closed state is smaller than the cross-section of the fuel-injection port (4) so that,when the flow guide means is closed, only a part of the port (4) is blocked and consequently the air flow is influenced so that in the cylinder the proportion of charging air which reduces the spin is reduced and the charging air which increases the spin and turbulence is increased.

2. An internal combustion engine according to claim 1, characterised in that the flow guide means has only two settings, i.e. an inoperative open position and an operative closed position.

3.  An internal combustion engine according to claim 1 or 2, characterised in that the flow guide means is controlled in dependence on the load on the engine.

4.  An internal combustion engine according to any of claims 1 to 3, characterised in that the flow guide means is adjustable in dependence on the charging pressure and/or the engine speed and/or the fuel-injection setting of the injection pump.

5.  An internal combustion engine according to any of claims 1 to 4, characterised in that the flow guide means is a flap (13, 14).

**Revendications**

1.  Moteur à combustion interne avec une tête de cylindre pour moteur diesel à injection directe, avec deux soupapes d'admission et deux soupapes d'échappement par cylindre, dont une première soupape d'admission (2) et une première soupape d'échappement (17) placées dans le plan longitudinal médian du moteur, et une seconde soupape d'admission (3) et une seconde soupape d'échappement (16) placées dans un plan transversal perpendiculaire au plan longitudinal médian du moteur, tandis qu'à chacune des soupapes d'admission (2, 3) est associé un canal d'admission (4, 5), dont un est réalisé sous la forme d'un canal de giration (5) tandis que l'autre est réalisé sous la forme d'un canal de remplissage (4), et le canal de giration (5) est associé à la soupape d'admission (3) disposée dans la plan transversal, tandis que le canal de remplissage (4) est associé à la soupape d'admission (2) placée dans le plan longitudinal médian, et la canal de giration (5) est réalisé sans organe de guidage de l'écoulement influençant la section transversale, tandis qu'au centre de toutes les soupapes d'admission, est disposée une buse d'injection, moteur à combustion interne caractérisé en ce que dans le canal de remplissage (4) est disposé on organe réglable de guidage de l'écoulement, qui peut être réglé en fonction de paramètres du moteur de façon que cet organe de guidage de l'écoulement soit fermé dans la zone de charge partielle et ouvert dans la zone de pleine charge, et en ce que la surface de projection de l'organe de guidage de l'écoulement, sur le plan perpendiculaire à l'axe du canal, soit, lorsque l'organe de guidage de l'écoulement est fermé, plus petit que la section transversale du canal de remplissage (4), de sorte que celui-ci n'est fermé que dans une zone partielle lorsque l'organe de guidage de l'écoulement est fermé, et qu'ainsi l'écoulement de l'air soit influencé de façon à provoquer dans le cylindre une diminution de la quantité d'air de charge réduisant la giration et une augmentation de l'air de charge renforçant la giration et le tourbillonnement.

2.  Moteur à combustion interne selon la revendication 1, caractérisé en ce que l'organe de guidage de l'écoulement peut prendre seulement deux positions, à savoir une position d'ouverture au repos, et une position de fermeture en fonctionnement.

3.  Moteur à combustion interne selon la revendication 1 ou la revendication 2, caractérisé en ce que l'organe de guidage de l'écoulement est commandé en fonction de la charge du moteur à combustion interne.

4.  Moteur à combustion interne selon une des revendications 1 à 3, caractérisé en ce que l'organe de guidage de l'écoulement est susceptible d'être réglé en fonction de la pression de charge et/ou de la vitesse de rotation du moteur, et/ou de la situation de remplissage à la pompe d'injection.

5.  Moteur à combustion interne selon une des revendications 1 à 4, caractérisé en ce que l'organe de guidage de l'écoulement est un clapet (13, 14).

FIG. 1

FIG. 2

FIG. 3

FIG. 4

FIG. 5